# EUROPEAN PATENT APPLICATION

(11) **EP 4 796 958 A1**
(43) Date of publication of application: **26.08.2026**
(21) Application number: 24880212.6
(22) Date of filing: 21.10.2024
(51) Int. Cl.: G01V 3/15, G01V 3/10

(54) **SECURITY PAPER DETECTION DEVICE FOR FORMING PLURALITY OF MAGNETIC FIELDS**

(30) Priority: 19.10.2023 KR 20230140097; 18.10.2024 KR 20240142869
(71) Applicant: Lee, Myung Shin, Gyeonggi-do 13105 (KR)
(72) Inventor: Lee, Myung Shin, Gyeonggi-do 13105 (KR)
(74) Representative: Müller Hoffmann & Partner
(86) International application number: PCT/KR2024/015984
(87) International publication number: WO 2025/084875

(57) **Abstract**

The present invention relates to an electromagnetic security paper detection gate for preventing the leakage of security paper and, more particularly, to a security paper detection device for detecting an amorphous micro wire inserted into security paper. The security paper detection device according to an embodiment of the present invention comprises: a first antenna having a transmission coil and a reception coil; a second antenna which is spaced, in parallel, a predetermined distance apart from the first antenna and which has a transmission coil and a reception coil; a signal generation unit for supplying a current to the transmission coil provided in the first antenna and the transmission coil provided in the second antenna; a microcontroller for controlling the current direction of the transmission coil provided in the second antenna; and a switch means connected between the transmission coil provided in the first antenna and the transmission coil provided in the second antenna, so as to be switched by means of the control of the microcontroller.

## Description

### Technical Field

The present disclosure relates to an electromagnetic (EM) security paper detection gate for preventing the leakage of security paper, and more specifically, to a security paper detection device for detecting an amorphous micro wire inserted into security paper.

In this disclosure, the term "security paper detection device" is used collectively, and the term "security paper detection device" as used herein refers to a security paper detection gate that senses the presence or absence of security paper when a person carrying the security paper passes through the gate, triggering an alarm.

### Background Art

Recently, with the rapid growth of enterprises, security measures against the leakage of corporate documents have been devised. As such a security measure against the leakage of corporate documents, document security technology using security paper has been recently developed. Such security paper refers to paper into which an amorphous alloy is inserted, generating signals within an alternating magnetic field that can distinguish the material's characteristics.

This security paper is detected by an electromagnetic sensor at the gate. Specifically, when the amorphous alloy within the security paper approaches an alternating magnetic field generated by the sensor, strong Barkhausen noise is produced in the amorphous alloy due to the alternating magnetic field. By detecting the harmonic spectrum of this Barkhausen noise, the presence of security paper can be identified. Such a sensor may include: a transmission coil that generates the alternating magnetic field; a reception coil that detects the Barkhausen noise produced in the amorphous alloy by the alternating magnetic field generated by the transmission coil; and an electronic system that controls the alternating magnetic field generated by the transmission coil and processes the signals received by the reception coil. Therefore, since security paper containing an amorphous alloy can be detected at the gate including such a sensor, the leakage of documents printed on the security paper can be prevented.

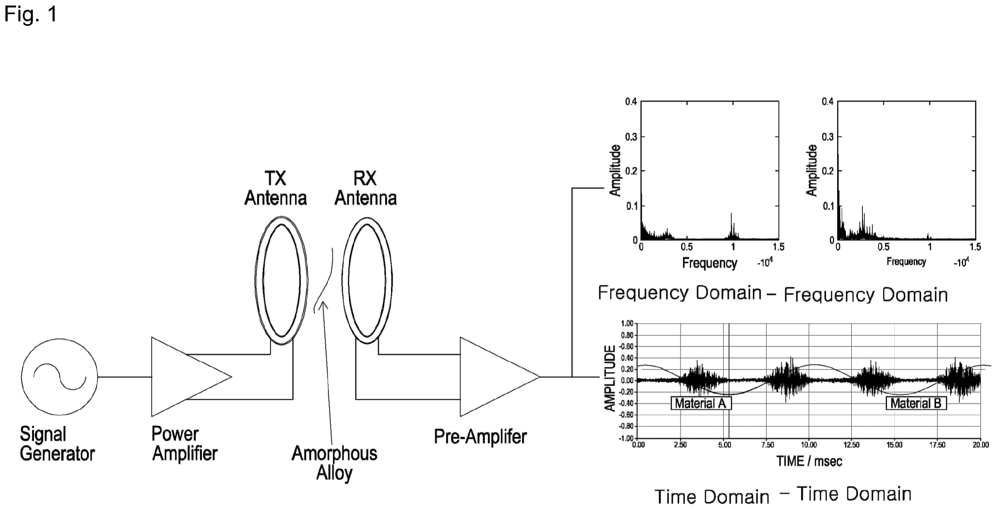

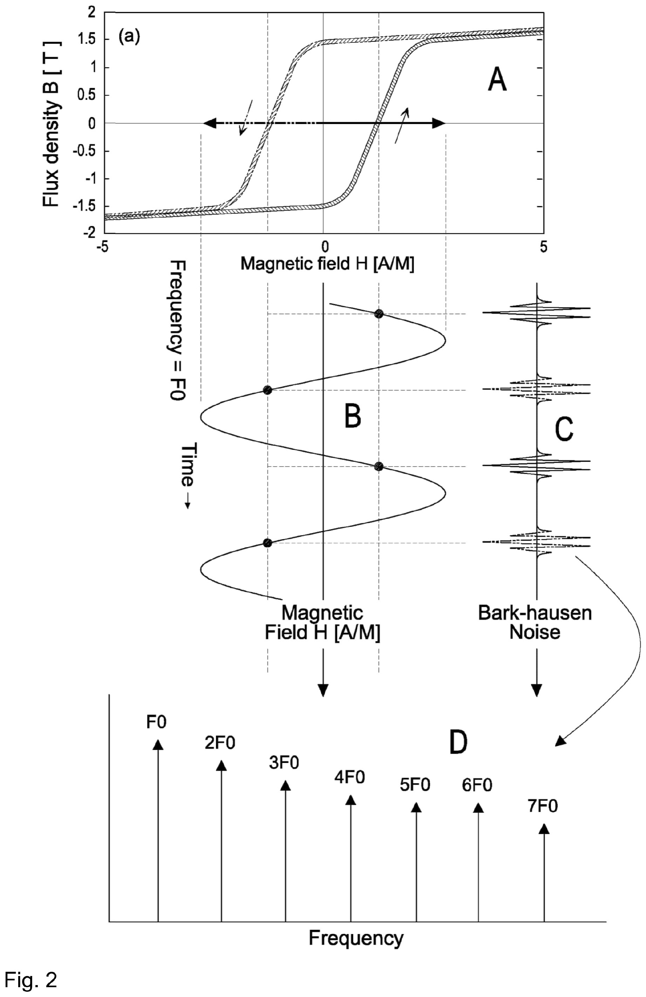

FIG. 2 is a diagram showing a process of Barkhausen noise generation, which is the core principle of the security paper detection device. When an alternating sinusoidal current, such as B in FIG. 2, is applied to the TX antenna of FIG. 1, an alternating magnetic field is formed around the TX and RX antennas. If amorphous metal serving as a security element of the security paper is present within the alternating magnetic field, a B-H curve of the amorphous metal is formed, as shown in A of FIG. 2. At this time, the magnetic domain arrangement within the amorphous metal changes along with the alternating magnetic field, producing noise as shown in C of FIG. 2. This noise is called Barkhausen noise. Such Barkhausen noise has a frequency spectrum with unique characteristics in the frequency domain, as shown in D of FIG. 2. This frequency spectrum with unique characteristics is analyzed, and if the spectrum matches that of the amorphous metal used as a security element, it is determined that security paper is present, and an alarm is triggered.

In the conventional art, U.S. Patent No. 5,414,410 discloses a transmitter for generating two alternating magnetic fields by way of a single transmitter coil fed with a transmitter signal current, and a receiver that detects harmonics and intermodulation signals of the alternating magnetic fields by way of a receiver coil that generates a receiver signal current.

Also, U.S. Patent No. 5,894,270 relates to an apparatus for the surveillance of an electronic security element in an interrogation zone, comprising a transmitting device emitting at least one periodic magnetic field signal into a detection area, with the signal causing the security element to generate a characteristic signal; a receiving device receiving the characteristic signal; and a unit evaluating the signals received from the receiving device and producing an alarm when the presence of the security element is established.

In addition, U.S. Patent No. 5,969,611 relates to an apparatus for the surveillance of an electronic security element in an interrogation zone. The apparatus includes a transmitting device emitting a transmitted signal into the interrogation zone, with this transmitted signal causing the security element to emit a characteristic signal, a receiving device receiving the characteristic signal generated by the security element by means of the transmitted signal, and a unit evaluating the characteristic signal and producing an alarm when the presence of the security element is established. The evaluation comprises eliminating a spike signal from the received signal if the received signal contains a spike signal.

In general, security paper detection devices are problematic in that the performance of security paper detection varies widely depending on the shape of a magnetic field formed along the current direction of TX (transmission) coils for forming a magnetic field in antennas installed parallel to each other, and depending on the orientation of the security paper passing through the security paper detection device.

### Prior Art Documents

(Patent Document 0001) U.S. Patent No. 5,414,410
(Patent Document 0002) U.S. Patent No. 5,894,270
(Patent Document 0003) U.S. Patent No. 5,969,611

### DETAILED DESCRIPTION OF THE INVENTION

### Technical Problem

The present disclosure aims to provide a security paper detection device that resolves the problems of the conventional art. More specifically, it is intended to overcome the problem involving the performance of security paper detection which varies widely depending on the shape of a magnetic field formed along the current direction of a transmission coil used to form a magnetic field in antennas installed parallel to each other, and depending on the orientation of the security paper passing through the security paper detection device.

### Technical Solution

To solve the above problems, an embodiment of the present disclosure provides a security paper detection device capable of preventing deterioration in detection performance which varies depending on the orientation of the security paper and the direction of the magnetic field, by frequently changing the direction of a current for magnetic field generation inputted into an antenna of the security paper detection device, while security paper passes through the antenna of the detection device, so that multiple magnetic field directions are applied to the security paper.

A security paper detection device according to an embodiment of the present disclosure comprises: a first antenna having a transmission coil and a reception coil; a second antenna which is spaced, in parallel, a predetermined distance apart from the first antenna and which has a transmission coil and a reception coil; a signal generation unit for supplying a current to the transmission coil provided in the first antenna and the transmission coil provided in the second antenna; a microcontroller for controlling the current direction of the transmission coil provided in the second antenna; and a switch means connected between the transmission coil provided in the first antenna and the transmission coil provided in the second antenna, so as to be switched by means of the control of the microcontroller.

### Effects of the Invention

According to an embodiment of the present disclosure, it is possible to prevent deterioration in detection performance which varies depending on the orientation of the security paper and the direction of the magnetic field, by frequently changing the direction of a current for magnetic field generation inputted into an antenna of a security paper detection device, while security paper passes through the antenna of the detection device, so that multiple magnetic field directions are applied to the security paper.

### BRIEF DESCRIPTION OF THE DRAWINGS

FIG. 1 is a diagram showing a basic conceptual view of a security paper detection device.
FIG. 2 is a diagram showing a process of Barkhausen noise generation.
FIG. 3 is a diagram showing an example of security paper that includes a micro wire as a security element.
FIG. 4 shows one example of the shape of a magnetic field, formed along the direction of a current for magnetic field generation flowing through the coils of security paper detection antennas installed parallel to each other, and the orientation of the security paper passing through the antennas.
FIG. 5 shows another example of the shape of a magnetic field, formed along the direction of a current for magnetic field generation flowing through the coils of security paper detection antennas installed parallel to each other, and the orientation of the security paper passing through the antennas.
FIG. 6 shows yet another example of the shape of a magnetic field formed along the direction of a current for magnetic field generation flowing through the coils of security paper detection antennas installed parallel to each other, and the orientation of the security paper passing through the antennas.
FIG. 7 shows a further example of the shape of a magnetic field formed along the direction of a current for magnetic field generation flowing through the coils of security paper detection antennas installed parallel to each other, and the orientation of the security paper passing through the antennas.
FIG. 8 is a circuit block diagram for illustrating a security paper detection device according to an embodiment of the present disclosure.
FIG. 9 is an essential part circuit block diagram for illustrating control of the current direction in a security paper detection device according to an embodiment of the present disclosure.
FIG. 10 shows one example of the shape of a magnetic field formed by a change in the direction of a current for magnetic field generation flowing through the coils of security paper detection antennas installed in parallel, according to an embodiment of the present disclosure.
FIG. 11 shows another example of the shape of a magnetic field formed by a change in the direction of a current for magnetic field generation flowing through the coils of security paper detection antennas installed in parallel, according to an embodiment of the present disclosure.

### Best Mode for Implementing the Invention

A security paper detection device according to an embodiment of the present disclosure comprises: a first antenna having a transmission coil and a reception coil; a second antenna which is spaced, in parallel, a predetermined distance apart from the first antenna and which has a transmission coil and a reception coil; a signal generation unit for supplying a current to the transmission coil provided in the first antenna and the transmission coil provided in the second antenna; a microcontroller for controlling the current direction of the transmission coil provided in the second antenna; and a switch means connected between the transmission coil provided in the first antenna and the transmission coil provided in the second antenna, so as to be switched by means of the control of the microcontroller.

Furthermore, according to the embodiment, the signal generation unit includes a signal generator and a power amplifier connected to the signal generator.

Furthermore, according to the embodiment, the transmission coil provided on the first antenna further includes a first transmission coil branch line and a second transmission coil branch line which extend outward from the first antenna, the transmission coil provided on the second antenna further includes a third transmission coil branch line and a fourth transmission coil branch line which extend outward from the second antenna, and the switch means includes a plurality of switches, each of the switches being connected between one of the first and second transmission coil branch lines and one of the third and fourth transmission coil branch lines.

Furthermore, according to the embodiment, the power amplifier of the signal generation unit includes a first line and a second line which are connected to the transmission coils, the switch means includes a first switch connected between the first line of the power amplifier and the second transmission coil branch line and the third transmission coil branch line, a second switch connected between the second line of the power amplifier and the first transmission coil branch line and the third transmission coil branch line, a third switch connected between the first line of the power amplifier and the second transmission coil branch line and the fourth transmission coil branch line, and a fourth switch connected between the second line of the power amplifier and the first transmission coil branch line and the fourth transmission coil branch line, and the microcontroller controls the switches so that the current direction of the second transmission coil is alternately switched.

Furthermore, according to the embodiment, in the switch means, the second switch and the third switch form a first switch block, and the first switch and the fourth switch form a second switch block, and the first switch block and the second switch block are connected to the microcontroller and controlled by the microcontroller.

Furthermore, according to the embodiment, an inverter is included between one of the first and second switch blocks and the microcontroller.

### Mode for Implementing the Invention

Hereinafter, the configuration of a security paper detection device according to the present disclosure will be described based on the accompanying drawings. The following description illustrates a preferred embodiment of this disclosure.

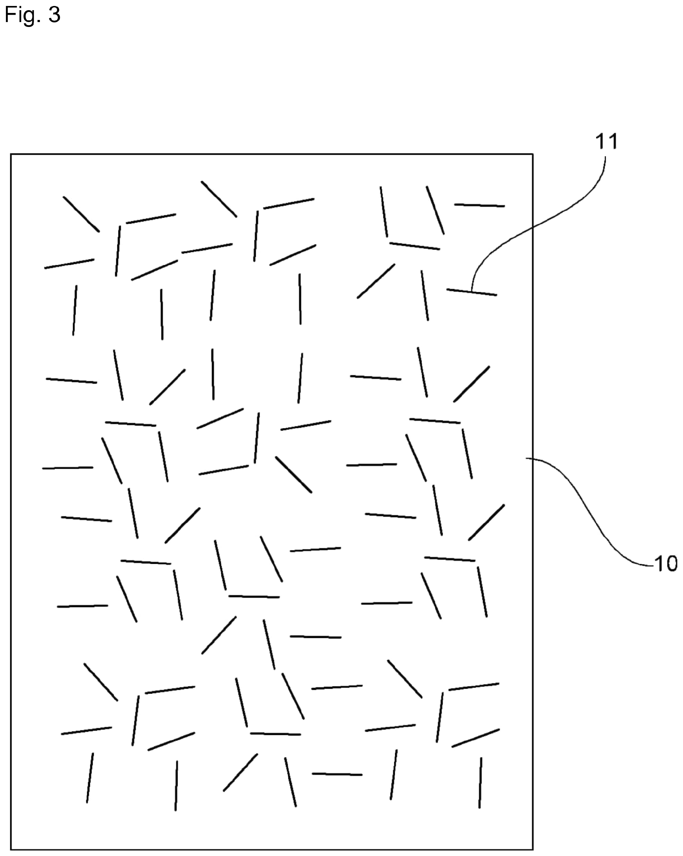

FIG. 3 is a diagram showing an example of security paper 10 that includes a micro wire 11 as a security element. Since the paper constituting the security paper 10 is formed in a two-dimensional plane, the micro wire 11, which is a security element included in the security paper, is distributed along the two-dimensional plane, as shown in FIG. 3. Furthermore, it is essential that the antennas of the detection device for detecting the security paper 10 are installed in parallel on both sides of a passageway to allow a person to pass through. Therefore, the shape of a magnetic field generated by the antennas installed in parallel is fixed in one direction. As a result, the direction of the magnetic field applied to the micro wire 11 included in the security paper 10 changes depending on the orientation of the security paper 10 passing through the detection antennas installed in parallel along the passageway. Consequently, the intensity of Barkhausen noise, which is a detection target signal generated from the micro wire 11, also varies. Thus, the detection rate differs depending on the orientation of the security paper 10 passing through the antennas of the security paper detection device.

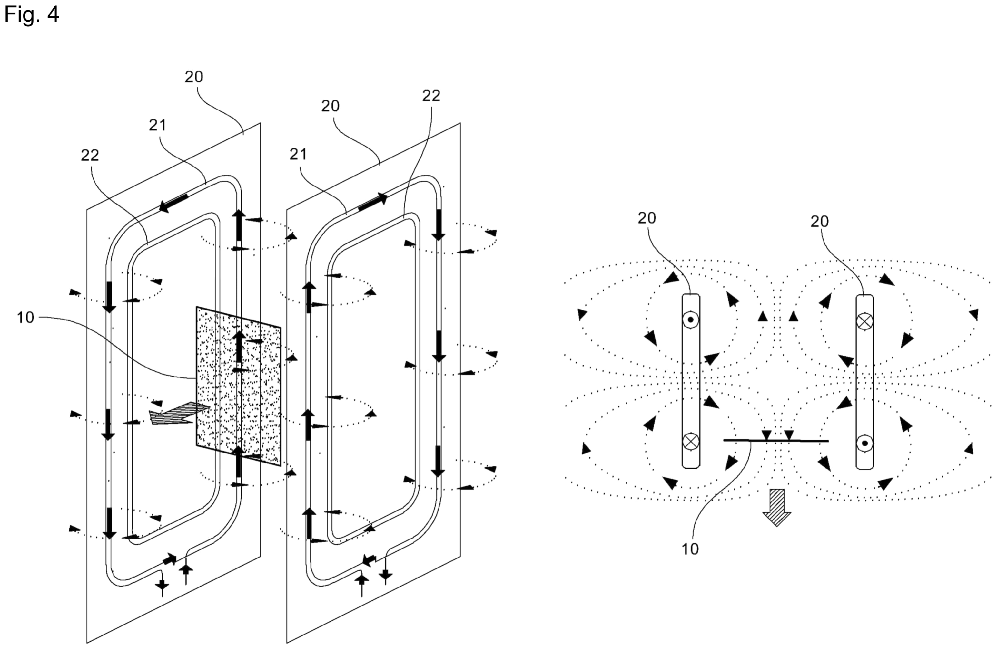

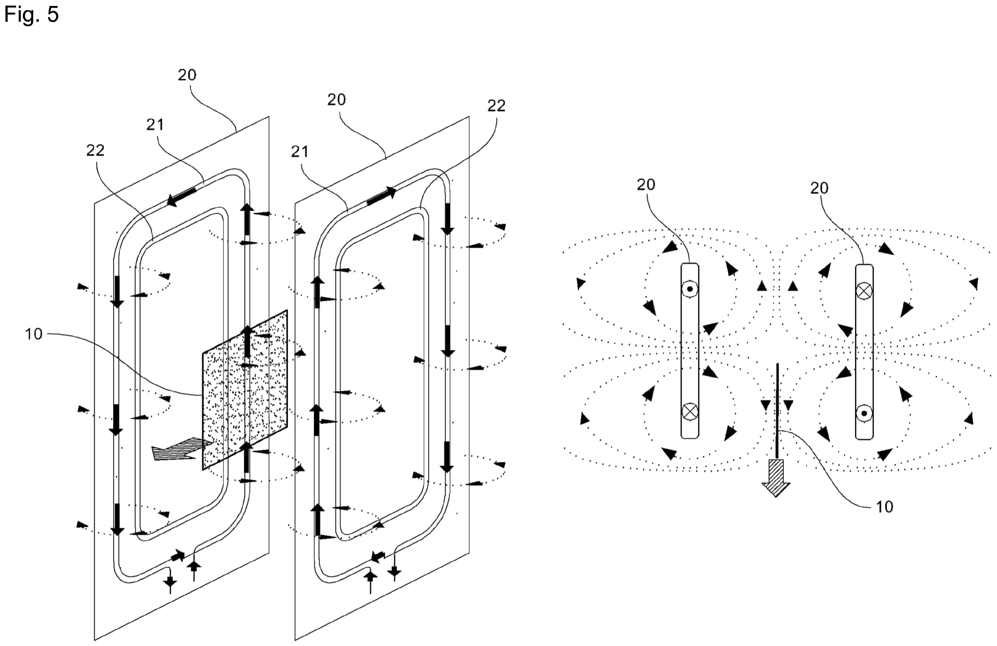

FIG. 4 shows one example of the shape of a magnetic field, formed along the direction of a current for magnetic field generation flowing through the coils of security paper detection antennas installed parallel to each other, and the orientation of the security paper passing through the antennas. FIG. 5 shows another example of the shape of a magnetic field, formed along the direction of a current for magnetic field generation flowing through the coils of security paper detection antennas installed parallel to each other, and the orientation of the security paper passing through the antennas.

As shown in FIG. 4 or FIG. 5, antennas 20 installed parallel to each other are each provided with a transmission coil 21 and a reception coil 22. When currents flowing through the transmission coils 21 of the parallel antennas are applied in opposite directions, magnetic fields are formed in such a way as to hit each other in the middle of the antennas 20 and become parallel to the antennas 20. In this case, when the security paper 10 passes in a direction perpendicular to the antennas 20, as in FIG. 4 (largely assuming that the security paper 10 is carried in a bag like a backpack worn on the back), the security paper 10 and the flow of the magnetic fields are perpendicular to each other. As a result, the magnetic fields do not affect the micro wire 11 which is a security element inside the security paper 10, so little Barkhausen noise is produced and detected poorly. On the other hand, when the security paper 10 passes in a direction parallel to the antennas 20, as in FIG. 5 (largely assuming that the security paper 10 is carried in a briefcase held by hand), the security paper 10 and the flow of the magnetic fields are parallel to each other. As a result, the magnetic fields effectively affect the micro wire 11 which is a security element inside the security paper 10, so strong Barkhausen noise is produced and detected well.

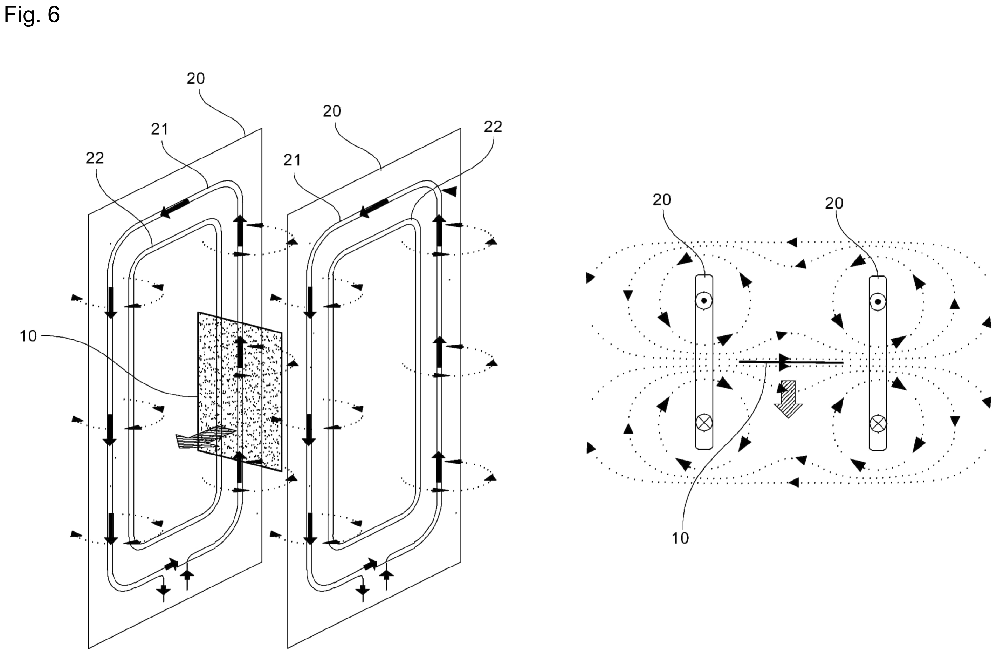

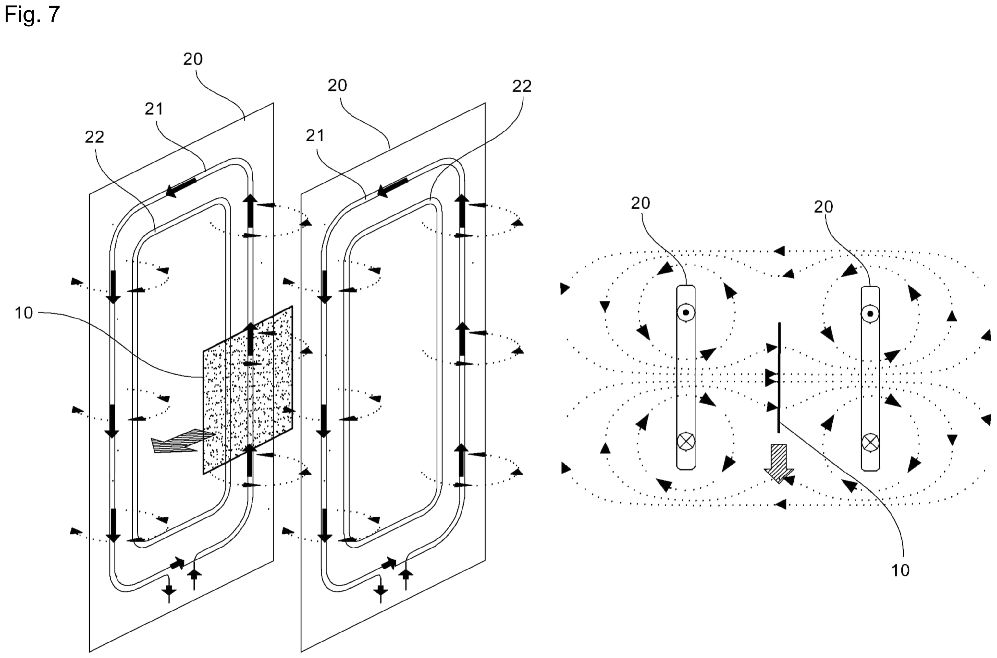

FIG. 6 shows yet another example of the shape of a magnetic field formed along the direction of a current for magnetic field generation flowing through the coils of security paper detection antennas installed parallel to each other, and the orientation of the security paper passing through the antennas. FIG. 7 shows a further example of the shape of a magnetic field formed along the direction of a current for magnetic field generation flowing through the coils of security paper detection antennas installed parallel to each other, and the orientation of the security paper passing through the antennas.

As another example, when currents flowing through the transmission coils 21 of the parallel antennas 20 are applied in the same direction, as in FIG. 6, magnetic fields are formed in a direction perpendicular to the antennas 20. In this case, when the security paper 10 passes in a direction perpendicular to the antennas 20, as in FIG. 6 (largely assuming that the security paper 10 is carried in a bag like a backpack worn on the back), the security paper 10 and the flow of the magnetic fields are parallel to each other. As a result, the magnetic fields effectively affect the micro wire 11 which is a security element inside the security paper 10, so strong Barkhausen noise is produced and detected well. On the other hand, when the security paper 10 passes in a direction parallel to the antennas 20, as in FIG. 7 (largely assuming that the security paper 10 is carried in a briefcase held by hand), the security paper 10 and the flow of the magnetic fields are perpendicular to each other. As a result, the magnetic fields do not affect the micro wire 11 which is a security element inside the security paper 10, so little Barkhausen noise is produced and detected poorly.

As described above, depending on the direction of the currents applied to the transmission coils 21 of the antennas 20 and the direction in which the security paper 10 passes, the security paper 10 is detected either well or poorly.

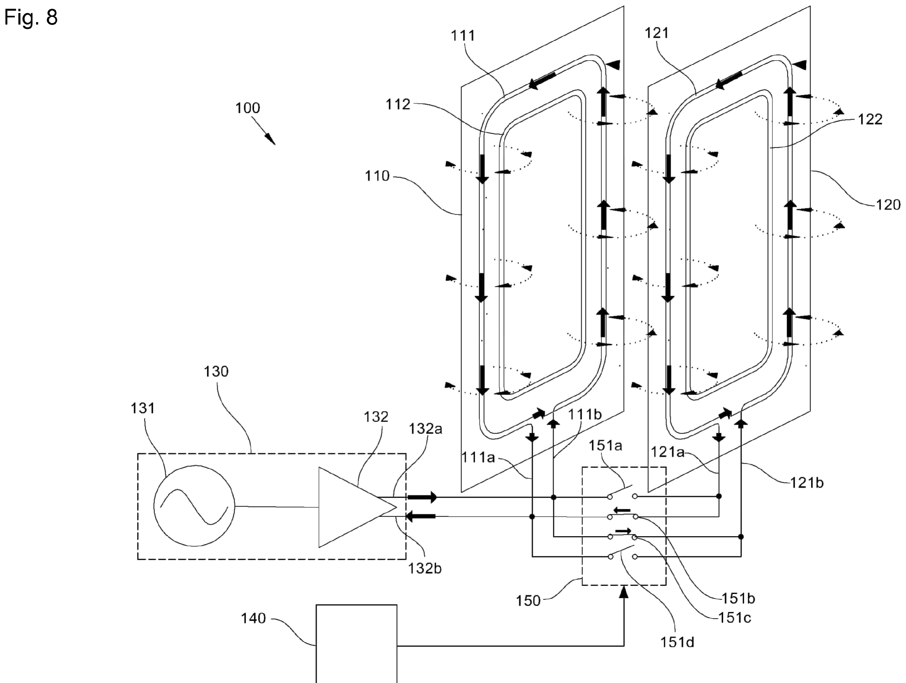

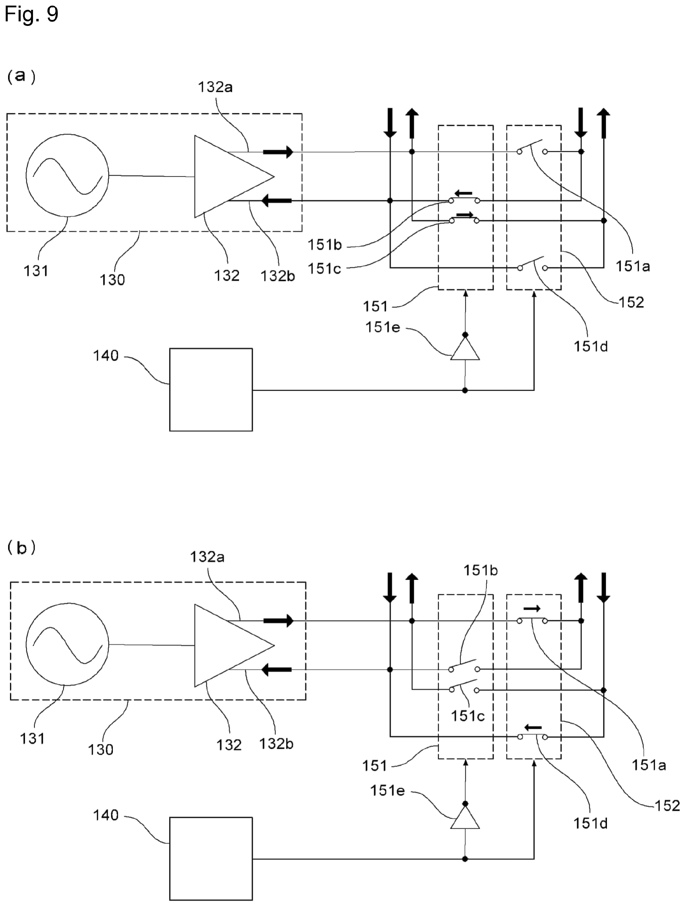

FIG. 8 is a circuit block diagram for illustrating a security paper detection device according to an embodiment of the present disclosure. FIG. 9 is an essential part circuit block diagram for illustrating control of the current direction in a security paper detection device according to an embodiment of the present disclosure.

Referring to FIGS. 8 and 9, the security paper detection device 100 according to an embodiment of the present disclosure comprises: a first antenna 110 having a transmission coil 111 and a reception coil 112, a second antenna 120 which is spaced, in parallel, a predetermined distance apart from the first antenna 110 and which has a transmission coil 121 and a reception coil 122; a signal generation unit 130 for supplying a current to the transmission coil 111 provided in the first antenna 110 and the transmission coil 121 provided in the second antenna 120; a microcontroller 140 for controlling the current direction of the transmission coil 121 provided in the second antenna 120; and a switch means 150 connected between the transmission coil 111 provided in the first antenna 110 and the transmission coil 121 provided in the second antenna 120, so as to be switched by means of the control of the microcontroller 140.

For example, the first antenna 110 and the second antenna 120 are each provided in a planar form. The transmission coil 111 is provided in a loop shape on the first antenna 110, and the transmission coil 121 is provided in a loop shape on the second antenna 120. The signal generation unit 130 is connected to the transmission coil 111 of the first antenna 110 and the transmission coil 121 of the second antenna 120 through two lines, supplying current to the transmission coil 111 of the first antenna 110 and the transmission coil 121 of the second antenna 120. According to the embodiment, the signal generation unit 130 includes a signal generator 131 and a power amplifier 132 connected to the signal generator 131. When the signal generator 131 generates a current signal, the power amplifier 132 amplifies the current signal and supplies current to the transmission coil 111 of the first antenna 110 and the transmission coil 121 of the second antenna 120. The power amplifier 132 is connected to the transmission coil 111 of the first antenna 110 and the transmission coil 121 of the second antenna 120 through two lines, forming a closed loop.

According to the embodiment, the transmission coil 111 provided on the first antenna 110 further includes a first transmission coil branch line 111a and a second transmission coil branch line 111b which extend outward from the first antenna 110. The transmission coil 121 provided on the second antenna 120 further includes a third transmission coil branch line 121a and a fourth transmission coil branch line 121b which extend outward from the second antenna 120. The switch means 150 includes a plurality of switches (for example, a first switch 151a, a second switch 151b, a third switch 151c, and a fourth switch 151d), each of the switches 151a, 151b, 151c, and 151d being connected between one of the first and second transmission coil branch lines 111a and 111b and one of the third and fourth transmission coil branch lines 121a and 121b. The microcontroller 140 controls the switches 151a, 151b, 151c, and 151d so as to control the current direction of the transmission coil 121.

In addition, according to the embodiment, the power amplifier 132 of the signal generation unit 130 includes a first line 132a and a second line 132b which are connected to the transmission coils 111 and 121. The switch means 150 includes a first switch 151a connected between the first line 132a of the power amplifier 132 and the second transmission coil branch line 111b and the third transmission coil branch line 121a, a second switch 151b connected between the second line 132b of the power amplifier 132 and the first transmission coil branch line 111a and the third transmission coil branch line 121a, a third switch 151c connected between the first line 132a of the power amplifier 132 and the second transmission coil branch line 111b and the fourth transmission coil branch line 121b, and a fourth switch 151d connected between the second line 132b of the power amplifier 132 and the first transmission coil branch line 111a and the fourth transmission coil branch line 121b. The microcontroller 140 controls the switches 151a, 151b, 151c, and 151d so that the current direction of the second transmission coil 121 is alternately switched.

For example, when the microcontroller 140 controls the first switch 151a and the fourth switch 151d to be turned on, it controls the second switch 151b and the third switch 151c to be turned off. When the microcontroller 140 controls the first switch 151a and the fourth switch 151d to be turned off, it controls the second switch 151b and the third switch 151c to be turned on. The microcontroller 140 performs such control frequently so that the current direction of the second transmission coil 121 is alternately switched.

In addition, according to the embodiment, in the switch means 150, the second switch 151b and the third switch 151c form a first switch block 151, and the first switch 151a and the fourth switch 151d form a second switch block 152. The first switch block 151 and the second switch block 152 are connected to the microcontroller 140 and controlled by the microcontroller 140. The microcontroller 140 may frequently control the first switch block 151 and the second switch block 152 so that they are switched to opposite states, allowing the current direction of the second transmission coil 121 to be alternately switched. For example, when the microcontroller 140 controls the first switch block 151 to be turned on, it controls the second switch block 152 to be turned off, and when the microcontroller 140 controls the first switch block 151 to be turned off, it controls the second switch block 152 to be turned on.

In addition, according to the embodiment, an inverter 151e may be included between one of the first and second switch blocks 151 and 152 and the microcontroller 140, so that opposite control signals are outputted to the first switch block 151 and the second switch block 152. For example, as shown in (a) of FIG. 9, when the inverter 151e is included between the first switch block 151 and the microcontroller 140, opposite control signals for controlling the first switch block 151 and the second switch block 152 may be outputted via a single output port of the microcontroller 140. Thus, when the second switch 151b and third switch 151c of the first switch block 151 are in the on state, the first switch 151a and fourth switch 151d of the second switch block 152 are in the off state. As shown in (b) of FIG. 9, when the second switch 151b and the third switch 151c of the first switch block 151 are in the off state, the first switch 151a and fourth switch 151d of the second switch block 152 are in the on state, thereby controlling the current direction of the second transmission coil 121 to be alternately switched.

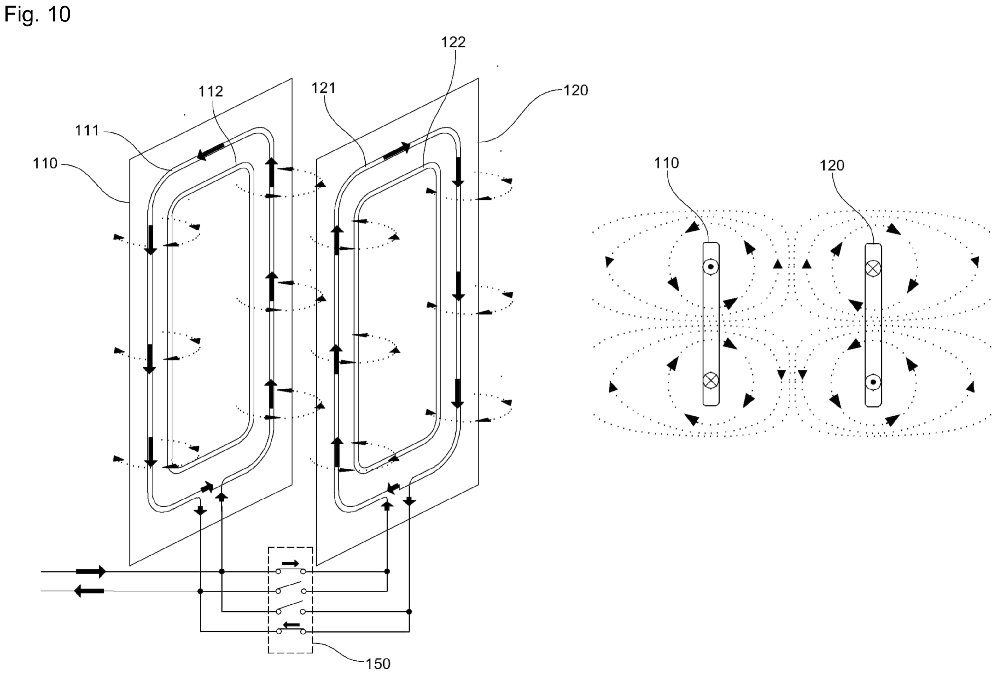

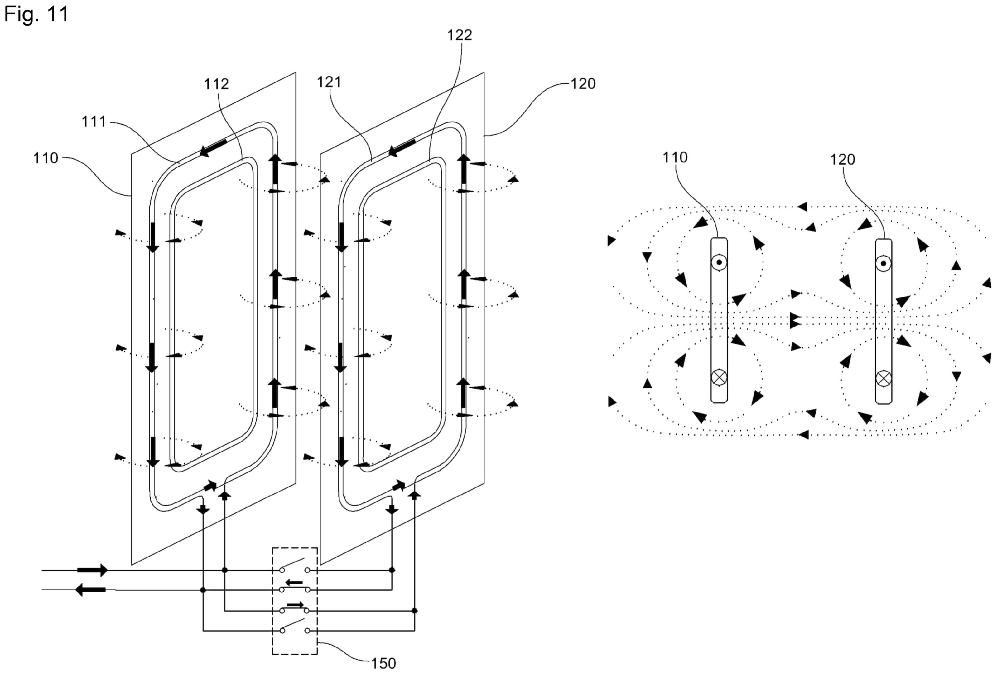

FIG. 10 shows one example of the shape of a magnetic field formed by a change in the direction of a current for magnetic field generation flowing through the coils of security paper detection antennas installed in parallel, according to an embodiment of the present disclosure. FIG. 11 shows another example of the shape of a magnetic field formed by a change in the direction of a current for magnetic field generation flowing through the coils of security paper detection antennas installed in parallel, according to an embodiment of the present disclosure.

Referring to FIGS. 8, 9, 10, and 11, the microcontroller 140 frequently controls the switch means 150 so that the direction of a current flowing through the transmission coil 121 of the second antenna 120 is the same as or opposite to the direction of a current flowing through the transmission coil 111 of the first antenna 110. By doing so, the magnetic fields of FIGS. 10 and 11 are formed in such a way as to frequently intersect each other. As a result, regardless of the orientation of the security paper passing through the middle of the first antenna 110 and the second antenna 120, which are installed in parallel, the magnetic fields affect the micro wire within the security paper. Consequently, Barkhausen noise is effectively generated, preventing any degradation in the performance of security paper detection.

As described above, the present disclosure is not limited to the above-described specific preferred embodiments, and various modifications can be made by any person having ordinary skill in the art without departing from the gist of the present invention claimed in the claims. Of course, such changes will fall within the scope of the claims.

### Industrial Applicability

It is possible to provide a security paper detection device capable of solving the problem involving the performance of security paper detection which varies widely depending on the orientation of security paper when a person carrying the security paper passes through a gate.

## Claims

1. A security paper detection device comprising:
a first antenna having a transmission coil and a reception coil;
a second antenna which is spaced, in parallel, a predetermined distance apart from the first antenna and which has a transmission coil and a reception coil;
a signal generation unit for supplying a current to the transmission coil provided in the first antenna and the transmission coil provided in the second antenna;
a microcontroller for controlling the current direction of the transmission coil provided in the second antenna; and
a switch means connected between the transmission coil provided in the first antenna and the transmission coil provided in the second antenna, so as to be switched by means of the control of the microcontroller.

2. The security paper detection device of claim 1, wherein the signal generation unit includes a signal generator and a power amplifier connected to the signal generator.

3. The security paper detection device of claim 1 or 2, wherein the transmission coil provided on the first antenna further includes a first transmission coil branch line and a second transmission coil branch line which extend outward from the first antenna, the transmission coil provided on the second antenna further includes a third transmission coil branch line and a fourth transmission coil branch line which extend outward from the second antenna, and the switch means includes a plurality of switches, each of the switches being connected between one of the first and second transmission coil branch lines and one of the third and fourth transmission coil branch lines.

4. The security paper detection device of claim 3, wherein the power amplifier of the signal generation unit includes a first line and a second line which are connected to the transmission coils, the switch means includes a first switch connected between the first line of the power amplifier and the second transmission coil branch line and the third transmission coil branch line, a second switch connected between the second line of the power amplifier and the first transmission coil branch line and the third transmission coil branch line, a third switch connected between the first line of the power amplifier and the second transmission coil branch line and the fourth transmission coil branch line, and a fourth switch connected between the second line of the power amplifier and the first transmission coil branch line and the fourth transmission coil branch line, and the microcontroller controls the switches so that the current direction of the second transmission coil is alternately switched.

5. The security paper detection device of claim 4, wherein, in the switch means, the second switch and the third switch form a first switch block, and the first switch and the fourth switch form a second switch block, and the first switch block and the second switch block are connected to the microcontroller and controlled by the microcontroller.

6. The security paper detection device of claim 5, wherein an inverter is included between one of the first and second switch blocks and the microcontroller.
